# EUROPÄISCHE PATENTSCHRIFT

(11) **EP 2 579 540 B1**
(45) Veröffentlichungstag und Bekanntmachung des Hinweises auf die Patenterteilung: **19.07.2017**
(21) Anmeldenummer: 11183786.0
(22) Anmeldetag: 04.10.2011
(51) Int. Cl.: H04L 29/08, H04L 29/06

(54) **KONTROLLE EINES KOMMUNIKATIONS-INPUTS EINER SPEICHERPROGRAMMIERBAREN STEUERUNG EINER AUTOMATISIERUNGSKOMPONENTE EINER TECHNISCHEN ANLAGE**
CONTROLLING A COMMUNICATION INPUT OF A MEMORY PROGRAMMABLE CONTROL DEVICE OF AN AUTOMATION COMPONENT OF A TECHNICAL ASSEMBLY
CONTRÔLER UNE ENTRÉE DE COMMUNICATION D'UNE COMMANDE À MÉMOIRE PROGRAMMABLE D'UN COMPOSANT D'AUTOMATISATION D'UNE INSTALLATION TECHNIQUE

(43) Veröffentlichungstag der Anmeldung: 10.04.2013
(73) Patentinhaber: Siemens Aktiengesellschaft, 80333 München (DE)
(72) Erfinder: Besold, Norbert, 92224 Amberg (DE); Kossack, Carl, 81476 München (DE); Schuierer, Wolfgang, 92421 Schwandorf (DE)

(56) Entgegenhaltungen:
- US-A1- 2002 162 026
- US-A1- 2005 021 839
- US-A1- 2006 085 839
- US-A1- 2010 042 689
- US-B1- 6 763 469

## Beschreibung

Die Erfindung betrifft ein computer-implementiertes Verfahren zur Kontrolle eines Kommunikations-Inputs einer speicherprogrammierbaren Steuerung einer Automatisierungskomponente einer technischen Anlage, eine Kontrollvorrichtung zur Kontrolle eines Kommunikations-Inputs einer speicherprogrammierbaren Steuerung einer Automatisierungskomponente einer technischen Anlage, ein Automatisierungsnetzwerk zur Steuerung und Kontrolle einer Kommunikation einer Eingangsschnittstelle einer speicherprogrammierbaren Steuerung einer Automatisierungskomponente einer technischen Anlage, einen Konfigurationsserver zur Konfiguration, Steuerung und Überwachung der Kontrollvorrichtung sowie ein Computerprogrammprodukt.

Den Stand der Technik geben folgende Druckschriften wieder:
US 2006/085839 A1 offenbart ein System, welches die Sicherheit von veralteten Netzwerkvorrichtungen, welche Bestandteile eines industriellen Automatisierungsnetzwerkes sind, dadurch erhöht, dass den veralteten Netzwerkvorrichtungen ein Proxy vorgeschaltet ist, welcher einen Zugang zu einer veralteten Netzwerkvorrichtung zulässt bzw. unterbindet, wobei eine zentrale Verwaltungseinheit dem Proxy Zugangsregeln bezüglich eines Zugangs zu einer veralteten Netzwerkvorrichtung zur Verfügung stellt.
US 2010/042689 A1 offenbart Geräte, Systeme und computerlesbare Medien, wobei einem Endgerät eines Netzwerkes eine Sicherheitsvorrichtung vorgeschaltet ist.
US 2005/021839 A1 offenbart eine Methode und eine Vorrichtung, wobei ein Router dazu ausgebildet ist, ein Netzwerksegment, welches industriell einsetzbare Netzwerkkomponenten aufweist, welche mit einem PLC und einem Web Server verbunden sind, von einem LAN oder WAN zu isolieren oder anzubinden, wobei im Falle einer Anbindung auch Web Verkehr ermöglicht werden kann.

Bisher können nur ganze Fertigungsinseln, also komplette Teilnetze eines Automatisierungsnetzwerks einer technischen Automatisierungsanlage durch externe Firewalls vor "unbefugten" Kommunikations-Inputs, d.h. Computerviren, Datenspionageversuchen, Datenmanipulationsversuchen, Fehleradressierungen usw., aus einem dem Teilnetz vorgeschalteten Netzwerk abgewehrt werden. Eine dezentrale, direkt an der Eingangsschnittstelle einer jeden speicherprogrammierbaren Steuerung einer Automatisierungskomponente lokalisierte Filterfunktionalität zur Abwehr von "unbefugten" Kommunikations-Inputs zum Versuch einer Datenmanipulation und/oder Datenspionage gibt es nach dem bisherigen Stand der Technik noch nicht. Somit liegt bezüglich eines lokalen Schutzes einer einzelnen speicherprogrammierbaren Steuerung einer Automatisierungskomponente innerhalb eines Automatisierungsnetzwerks bisher noch eine gewisse Sicherheitslücke vor. Einen effektiven Schutz vor gegenseitiger negativer Beeinflussung von einzelnen miteinander kommunizierenden Automatisierungskomponenten innerhalb einer Fertigungsinsel einer Automatisierungsanlage gibt es demnach auch noch nicht.

Demgegenüber liegt der Erfindung die Aufgabe zugrunde, ein verbessertes computer-implementiertes Verfahren zur Kontrolle eines Kommunikations-Inputs einer speicherprogrammierbaren Steuerung einer Automatisierungskomponente einer technischen Anlage, eine verbesserte Kontrollvorrichtung zur Kontrolle eines Kommunikations-Inputs einer speicherprogrammierbaren Steuerung einer Automatisierungskomponente einer technischen Anlage, ein verbessertes Automatisierungsnetzwerk zur Steuerung und Kontrolle einer Kommunikation einer Eingangsschnittstelle einer speicherprogrammierbaren Steuerung einer Automatisierungskomponente einer technischen Anlage, einen Konfigurationsserver zur Konfiguration, Steuerung und Überwachung der Kontrollvorrichtung sowie ein verbessertes Computerprogrammprodukt zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Es wird ein computer-implementiertes Verfahren zur Kontrolle eines Kommunikations-Inputs einer speicherprogrammierbaren Steuerung einer Automatisierungskomponente einer technischen Anlage geschaffen, wobei das Kontrollverfahren unmittelbar vor einer Eingangsschnittstelle der speicherprogrammierbaren Steuerung stattfindet und folgende Verfahrensschritte umfasst:
- einen Soll-/Ist-Abgleich zwischen einem Kommunikations-Input und vordefinierten Regeln einer Soll-Kommunikation,
- im Falle, dass der Kommunikations-Input mindestens einer vordefinierten Regel der Soll-Kommunikation entspricht, der Kommunikations-Input direkt an die Eingangsschnittstelle der speicherprogrammierbaren Steuerung weitergeleitet wird,
- im Falle, dass der Kommunikations-Input nicht mindestens einer vordefinierten Regel entspricht, der Kommunikations-Input an ein Prozessormittel weitergeleitet wird, in welchem zunächst eine interne Statistik aller Soll/-Ist-Abweichungen fortgeschrieben wird und dann mittels einer vordefinierten Reaktionsmatrix entschieden wird, ob der jeweilige Kommunikations-Input zum Absetzen einer vordefinierten aktiven Warnung führen soll,
- im Falle, dass der Kommunikations-Input nicht mindestens einer vordefinierten Regel entspricht, der Kommunikations-Input von dem Prozessormittel an ein der Eingangsschnittstelle der speicherprogrammierbaren Steuerung vorgeschaltetes Gate weitergeleitet wird, in welchem in Abhängigkeit von der Reaktionsmatrix bestimmt wird, ob der Kommunikations-Input geblockt wird oder nicht.

Dies kann den Vorteil haben, dass durch Vorschalten einer Filterfunktionalität unmittelbar vor die Eingangsschnittstelle einer speicherprogrammierbaren Steuerung einer Automatisierungskomponente z.B. ein innerhalb eines Teilnetzes eines Automatisierungsnetzwerks gestarteter Versuch zur Datenmanipulation oder Datenspionage unter Umgehung einer dem Teilnetz vorgeschalteten Firewall lokal an der einzelnen Automatisierungskomponente selbst, unmittelbar vor der Eingangsschnittstelle ihrer speicherprogrammierbaren Steuerung, abgewehrt werden kann.

Dadurch, dass lokal an jeder speicherprogrammierbaren Steuerung ein Soll-/Ist Abgleich zwischen dem ankommenden Kommunikations-Input und vordefinierten Regeln einer Soll-Kommunikation stattfindet, können für jede speicherprogrammierbare Steuerung individuelle Regeln für die Soll-Kommunikation definiert werden. Die lokalen Filter für die Netzwerkkommunikation erlauben somit einen höheren Grad der Differenzierung einer "befugten" bzw. "unbefugten" Kommunikation. Gleichzeitig wird der Grad der Skalierbarkeit eines Teilnetzwerks eines Automatisierungsnetzwerks erhöht.

Dadurch, dass in einem Prozessormittel nur eine Fortschreibung einer internen Statistik aller/-Ist-Abweichungen erfolgt und keine Logfiles lokal abgespeichert werden, wird weniger Speicherplatz in Anspruch genommen und gleichzeitig die Tatsache berücksichtigt, dass speicherprogrammierbaren Steuerungen von Automatisierungskomponenten aufgrund eines kontinuierlichen Produktionsprozesses meistens aktiv sind und somit eine Auswertung von lokalen Logfiles nicht effizient wäre.

Dadurch, dass an jeder speicherprogrammierbaren Steuerung lokal eine Anwendung einer vordefinierten Reaktionsmatrix stattfindet, mittels dessen eine Entscheidung fällt, ob vom Prozessormittel eine Warnung angesetzt und eine Informationsnachricht und/oder ein Kommunikationsinput weiter zum Gate weitergeleitet wird, wo wiederum mittels der Reaktionsmatrix entschieden wird, ob der Kommunikations-Input geblockt wird oder nicht, kann auch die Reaktionsmatrix für jede speicherprogrammierbaren Steuerung individualisiert werden, wodurch sich der Grad der Differenzierung der Reaktionen von sich in einem Verbund befindlichen mehreren speicherprogrammierbaren Steuerung erhöhen lässt. Durch Individualisierung der Reaktionsmatrix einer speicherprogrammierbaren Steuerung innerhalb eines Teilnetzes können somit auch die Automatisierungskomponenten vor negativen Einflüssen der sich im Teilnetz befindlichen Automatisierungskomponenten geschützt werden.

Dadurch, dass durch in dem einer Eingangsschnittstelle vorgeschalteten Gate ebenfalls eine lokale Anwendung der Reaktionsmatrix stattfindet, die darüber entscheidet, welcher Kommunikations-Input geblockt wird oder nicht, kann auch hier eine Individualisierung der Regeln zum Blocken eines Kommunikations-Inputs erfolgen, so dass lokal an der Eingangsschnittstelle einer speicherprogrammierbare Steuerung einer Automatisierungskomponente differenziert entschieden werden kann, von welcher Automatisierungskomponente eine andere Automatisierungskomponente einen Kommunikations-Input erhält, wodurch Fehladressierungen verhindert werden, und eine gegenseitige negative Beeinflussung von Automatisierungskomponenten verhindert wird. Zur Vermeidung einer Kommunikationslast können zudem lokal vor jeder Eingangsschnittstelle einer speicherprogrammierbaren Steuerung irrelvante und redundate Kommunikations-Inputs durch ein Abblocken im lokale Gate gefiltert werden, wobei auf die Kommunikationskapazität jeder einzelnen speicherprogrammierbare Steuerung einer Automatisierung Rücksicht genommen werden kann.

Der lokal bei jeder einzelnen speicherprogrammierbaren Steuerung einer Automatisierungskomponente einer technischen Automatisierungsanlage positionierte Filtermechanismus mit Überprüfung der lokal ankommenden Kommunikations-Inputs ermöglicht somit eine sicherheitstechnische Segmentierung des Automationsnetzwerks auf höchstmöglicher Granularitätsstufe.

Eine Speicherprogrammierbare Steuerung (SPS), englisch Programmable Logic Controller (PLC), ist ein Gerät, das zur Steuerung oder Regelung einer Maschine oder Anlage eingesetzt wird und auf digitaler Basis programmiert wird.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren und/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das PROFIBUS-Protokoll (z. B. gemäß IEC 61158), ein PROFIBUS-DP-Protokoll, ein PROFIBUS-PA-Protokoll, ein PROFINET-Protokoll, ein PROFINET-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernet-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Nach einer Ausführungsform der Erfindung werden die Regeln der Sollkommunikation erstellt durch:
- einen Lernmodus, wobei nach einem Einschalten des Lernmodus die speicherprogrammierbare Steuerung ein Kommunikations-Input-Profil abspeichert,
- eine manuelle Konfiguration, oder
- indem ein zentraler Server ein Kommunikations-Input-Profil auf die speicherprogrammierbare Steuerung verteilt.

Dass verschiedene Möglichkeiten zur Erstellung der Regeln der Soll-Kommunikation existieren, ermöglicht auf vorteilhafte Weise eine Berücksichtigung der jeweils gegebenen Systemumgebung einer technischen Anlage und auch spezieller Situationen.

Fällt z.B. ein zentraler Konfigurationsserver aus, oder ist ein solcher in dem jeweiligen Automatisierungsnetzwerk gar nicht vorhanden, so kann man die Regeln der Soll-Kommunikation manuell konfigurieren.

Ist ein zentraler Konfigurationsserver wiederum in dem jeweiligen Automatisierungsnetzwerk vorhanden, so können die Regeln der Soll-Kommunikation zentral auf dem Konfigurationsserver definiert werden und von dort in Form eines Kommunikations-Input-Profils systemweit an die jeweiligen speicherprogrammierbare Steuerungen verteilt werden, was den Administrationsaufwand erheblich verringert.

Dass die Regeln der Soll-Kommunikation einen Lernmodus aufweisen, kann den Vorteil haben, dass nach einer Lernphase eine speicherprogrammierbare Steuerung automatisch die anderen am Automatisierungsnetzwerk teilnehmende speicherprogrammierbarn Steuerung erkennt. So müssen die teilnehmenden speicherprogrammierbaren Steuerungen nicht neu projektiert werden. Bei einer Erweiterung der technischen Anlage ist keine neue Konfiguration der teilnehmenden speicherprogrammierbaren Steuerungen notwendig, was den Administrationsaufwand erheblich reduziert.

Nach einer Ausführungsform der Erfindung weist die Reaktions-matrix Steuerungsmerkmale zur Steuerung von Prozessen im Prozessormittel und/oder in dem Gate auf, wobei anhand der Steuerungsmerkmale entschieden wird:
- auf welche Weise eine Fortschreibung der Statistik aller Soll/-Ist-Abweichungen erfolgen soll,
- ob eine Warnung, welche eine Informationsnachricht umfasst, abgesetzt werden soll,
- und in dem Falle, dass eine Warnung abgesetzt werden soll, in welcher Form die Informationsnachricht ergehen soll,
- welche Informationsnachricht übertragen werden soll,
- an welche Adresse die Informationsnachricht geschickt werden soll, und/oder
- ob der Kommunikations-Input in dem Gate geblockt werden soll oder nicht.

Die Reaktionsmatrix kann somit zur Steuerung von drei verschiedenen Arten von sicherheitstechnischen Reaktionen eingesetzt werden: Absetzen von Warnungen, Versenden von Informationsnachrichten unter Nutzung verschiedener Medien und/oder ein Abblocken eines Kommunikations-Inputs.

Dies kann den Vorteil haben, dass durch z.B. eine zentrale Konfiguration einer Reaktionsmatrix Sicherheitsmaßnahmen auf verschiedenen Ebenen ergriffen werden können, und somit den verschiedenen Phasen und Elementen des Incident- und/oder Event-Managements durch einen erheblich reduzierten Administrationsaufwand entsprochen wird. Sowohl eine Klassifizierung von Warnstufen, Protokollierung von Events, Fortschreiben einer Statistik der Soll/-Ist-Abweichungen mit Möglichkeit zur Auswertung, Reporting an verschiedene Adressen und Ergreifen einer konkreten Gegenmaßnahme lassen sich durch Konfiguration einer Reaktionsmatrix ohne viel Aufwand definieren.

Nach einer Ausführungsform der Erfindung wird die Reaktions-matrix als eine stand-alone Konfiguration direkt bei einer Projektierung der speicherprogrammierbaren Steuerung eingegeben wird und/oder als ein Profil von einem zentralen projektierten Konfigurationsserver übertragen.

Je nach den gegebenen Bedingungen eines Automatisierungsnetzwerks lässt sich die Reaktionsmatrix einer speicherprogrammierbaren Steuerung lokal als stand-alone Konfiguration bei der individuellen Projektierung einer speicherprogrammierbare Steuerung administrieren, aber auch, bei Vorhandensein eines zentralen Konfigurationsservers, zentral bei der Projektierung des Konfigurationsservers definieren und von dort über das Netzwerk als Kommunikationsprofil zum Prozessormittel und/oder zum Gate der lokalen Filtervorrichtung einer speicherprogrammierbaren Steuerung übermitteln. Dies zeigt Flexibilität bei der Administration der Reaktionsmatrix mit Anpassungsfähigkeit an die jeweilige Systemlandschaft und die jeweilige Situation.

Während eine zentrale Konfiguration der Reaktionsmatrix Zeit- und Kostenvorteile bringt, kann eine lokale stand-alone Konfiguration sich z.B. bei Ausfallzeiten des Konfigurationsservers oder anderen Notsituationen als vorteilhaft erweisen.

Nach einer Ausführungsform der Erfindung umfassen die Regeln der Soll-Kommunikation mindestens ein Attribut, wobei ein Attribut mindestens eine MAC-Adresse, mindestens eine IP-Adresse, mindestens einen Port, mindestens einen Profinet-Gerätenamen, mindestens eine Anzahl von TCP-Verbindungen und/oder mindestens eine Anzahl von Datenpaketen pro Zeiteinheit umfasst.

Die Regeln der Soll-Kommunikation können somit zur Entscheidung, ob ein "befugter" oder "unbefugter" Kommunikations-Input vor der Eingangsschnittstelle einer speicherprogrammierbaren Steuerung ankommt, nicht nur ein Attribut, sondern auch mehrere Attribute als Entscheidungskriterium verwenden. Durch eine Kombination von mehreren Entscheidungsmerkmalen kann somit eine präzisere und schnellere Entscheidung vorgenommen werden. Die Fehlerrate der Identifikation eines "befugten" bzw. "unbefugten" Kommunikations-Inputs wird erheblich reduziert. Bei einer positiven Erkennung, dass ein Kommunikations-Input nicht schädlich ist, ist durch die Kombination von mehreren verifizierten Entscheidungsmerkmalen die Wahrscheinlichkeit höher, dass die Identifizierung richtig ist und somit kann das Kommunikations-Input ohne weitere Umwege direkt an die Eingangsschnittstelle einer speicherprogrammierbaren Steuerung weitergeleitet werden. Die Kommunikation zwischen den speicherprogrammierbaren Steuerungen der Automatisierungskomponenten wird damit weniger beeinträchtigt.

Im Falle, dass ein Kommunikations-Input durch eine Kombination von mehreren verifizierten Regelverstößen als "unbefugt" klassifiziert wurde, ist auch hier die Wahrscheinlichkeit höher, dass die Identifizierung nicht fehlerhaft ist. Erst solche als "unbefugt" identifizierten Kommunikations-Inputs werden nicht direkt an die Eingangsschnittstelle einer speicherprogrammierbaren Steuerung weitergeleitet, sondern erst durch weitere Stufen der Filterung im Prozessormittel und schließlich zum Gate weitergeleitet, wobei in letzterem entweder ein Blocken oder eine Weiterleitung an die Eingangsschnittstelle der speicherprogrammierbaren Steuerung erfolgt, in Abhängigkeit von den Ergebnissen weiterer Überprüfungen anhand von definierten Regeln der Reaktionsmatrix.

Außerdem können durch die Nutzung von verschiedenen Arten von Attributen in den Regeln der Soll-Kommunikation vorteilhafter Weise unterschiedliche Arten von "unbefugten" Kommunikations-Inputs (z.B. Computerviren, Datenspionageversuchen, Datenmanipulationsversuchen, Fehleradressierungen usw.) identifiziert werden. So befugt z.B. die Überprüfung der Anzahl von TCP-Verbindungen, ob eine Situation der Überlastung des Kommunikationsystems vorliegt. Eine Überprüfung der IP-Adresse beispielsweise lässt auf die Herkunft des Kommunikations-Inputs schließen. Gleichzeitig zeigt der beschriebene Überprüfungsmechanismus damit Skalierbarkeit für unterschiedliche Sicherheitsanforderungen.

Nach einer Ausführungsform der Erfindung wird die Warnung in Form einer Mail, einer SMS, über SNMP und/oder mittels eines Webservices kommuniziert.

Die unterschiedliche Weise, mit der eine Warnung erfolgen kann, zeigt Flexibilität bei der Kommunikation einer Warnung und Anpassung an die jeweils gegebene Systemlandschaft. Gleichzeitig kann eine Warnung redundant in mehreren Formen ausgegeben werden, um den Informationsgrad und die Anzahl der Empfänger zu erhöhen. Dabei spielt die Distanz zum Empfänger keine Rolle, da auch Mails, Sms und/oder Webservices genutzt werden können, welche eine weltweite Erreichbarkeit ermöglichen.

Nach einer Ausführungsform der Erfindung steht die Statistik aller Soll/-Ist-Abweichungen zum Auslesen durch zentrale Server bereit.

Dies kann den Vorteil haben, dass keine Logfiles lokal bei den speicherprogrammierbaren Steuerungen gespeichert werden müssen. Stattdessen werden nur die Soll/-Ist-Abweichungen lokal bei den speicherprogrammierbaren Steuerungen fortgeschrieben. Dies bedeutet Einsparung von Speicherplatz bei der speicherprogrammierbaren Steuerung.

Gleichzeitig ermöglicht die Fähigkeit zum Auslesen der lokal fortgeschriebenen Statistik durch einen zentralen Server, dass die Auswertung zentral und/oder getrennt von der technischen Anlage z.B. auf einen extra für das Event- und Incident Management gedachten Server vorgenommen werden kann. Diesen zentralen Auswertungen können wiederum auch für eine zentrale Anpassung der Soll- und Reaktionsmatrix benutzt werden.

In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung eine Kontrollvorrichtung zur Kontrolle eines Kommunikations-Inputs einer speicherprogrammierbaren Steuerung gemäß den Ansprüchen 9 und 10.

In einem weiteren Aspekt betrifft die Erfindung ein Automatisierungsnetzwerk zur Steuerung und Kontrolle einer Kommunikation einer Eingangsschnittstelle einer speicherprogrammierbaren Steuerung.

In einem weiteren Aspekt betrifft die Erfindung einen Konfigurationsserver, welcher zur Konfiguration, Steuerung und Überwachung der Kontrollvorrichtung ausgebildet ist.

Im Folgenden werden bevorzugte Ausführungsformen der Erfindung anhand der folgenden Zeichnungen näher erläutert.

Es zeigen:
- FIG 1: Blockdiagramm der Kontrollvorrichtung zur Kontrolle eines Kommunikations-Inputs einer speicherprogrammierbaren Steuerung,
- FIG 2: Attribute in Regeln einer Soll-Kommunikation,
- FIG 3: Reaktionsmatrix.

Elemente der nachfolgenden Ausführungsformen, die einander entsprechen oder gleichen werden mit identischen Bezugszeichen gekennzeichnet.

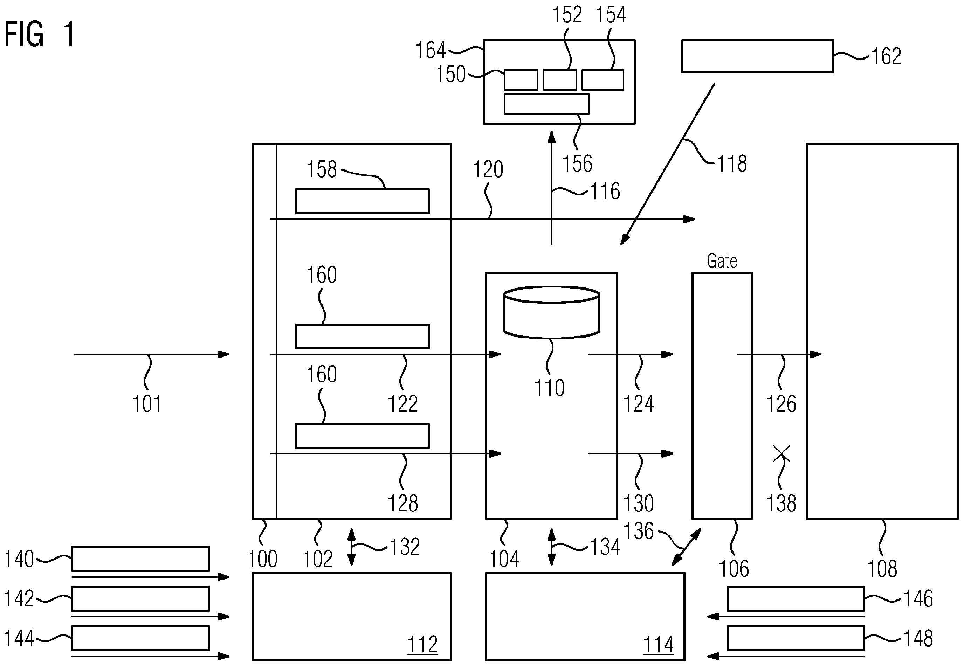

Die FIG 1 zeigt ein Blockdiagramm der Kontrollvorrichtung zur Kontrolle eines Kommunikations-Inputs einer speicherprogrammierbaren Steuerung. Ein Kommunikations-Input-Signal 101, kommend aus einem Ethernetnetzwerk, dem Profi-Net, dem ProfiBus oder einer sonstigen Programmierschnittstelle, wird von den Mitteln zum Empfang eines Kommunikations-Inputs 100 empfangen. In den Mitteln zur Durchführung eines Soll-/Ist-Abgleichs 102 erfolgt eine Überprüfung, ob der empfangene Kommunikations-Input 101 mindestens eine Regel der Soll-Kommunikation 112 erfüllt oder nicht. Wird mindestens eine Regel der Soll-Kommunikation 112 erfüllt, so erfolgt eine Weiterleitung des Kommunikations-Input-Signals 120 direkt an die Eingangsschnittstelle der speicherprogrammierbaren Steuerung 108.

Ergab die Überprüfung, dass eine Regel der Soll-Kommunikation 112 nicht erfüllt ist, so wird das Kommunikations-Input-Signal 122 bzw. 128 in das Prozessormittel 104 weitergeleitet.

Im Prozessormittel findet zunächst eine Fortschreibung der Statistik 110 aller Soll-Ist Abweichungen statt, welche von einem zentralen Server Signale zur Abfrage und zur Auslesung 118 empfängt und zur Bestimmung ihres Fortschreibemodus Steuerungssignale 134 der Reaktionsmatrix 114 empfängt.

In Abhängigkeit von vordefinierten Reaktionen in der Reaktionsmatrix 114 kann nun eine Warnung 116 in Form einer Mail 150, Sms 152, über SNMP 154 oder einen Webservice 156 abgegeben werden.

Das Kommunikations-Input-Signal 126 wird weitergeleitet an das Gate 106. Da eine weitere Überprüfung im Info-Gate 106 anhand von weiteren Regeln der Reaktionsmatrix 114 ergab, dass keine Abweichung 158 und damit ein "unbefugtes" Kommunikations-Input vorliegt, wird das Kommunikations-Input-Signal 126 direkt weitergeleitet in die Eingangsschnittstelle der speicherprogrammierbaren Steuerung 108.

Ergab eine weitere Überprüfung im Info-Gate 106 anhand von weiteren Regeln der Reaktionsmatrix 114, dass eine Abweichung 160 und damit ein "unbefugtes" Kommunikations-Input vorliegt, so erfolgt wird das Kommunikations-Input-Signal 138 geblockt.

Die Reaktionsmatrix 114 sendet Steuerungssignale 134 zum Prozessormittel und sendet Steuerungssignale 136 an das Gate. Ebenso empfängt die Reaktions-Matrix 114 Kontrollsignale 134 vom Prozessormittel 104 und Kontrollsignale 136 vom Gate 106.

Die Erstellung der Regeln für die Soll-Kommunikation 112 kann entweder über einen Lernmodus 140, eine stand alone Konfiguration 142 oder durch einen Konfigurationsserver 144 erfolgen.

Die Erstellung der Reaktionen für die Reaktionsmatrix 114 kann entweder als eine stand alone Konfiguration 146 oder durch einen Konfigurationsserver 148 erfolgen.

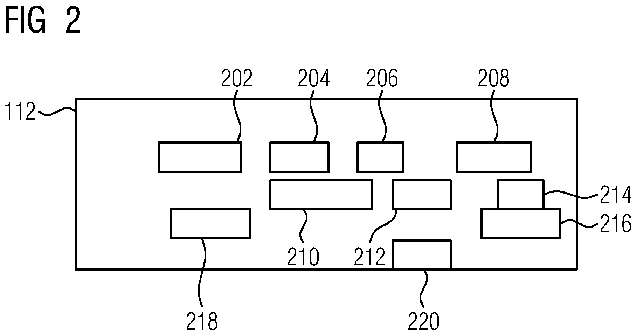

In FIG 2 wird ein Beispiel einer Soll-Kommunikation 112 gezeigt. Hier werden als Attribute zur Definition von Regeln einer Soll-Kommunikation beispielsweise die MAC-Adresse 202, die IP-Adresse 204, der Port 206 und/oder das Protokoll 208 verwendet. Die in der Spalte jeweils eingetragenen Werte 144. 145. 160.* 210 für die IP-Adresse 202, 2000 212 für den Port 206, TCP 214 für das Protokoll 208, Profi-Safe 216 für das Protokoll 208, 00:0A:BB:* 218 für die MAC-Adresse, <1000 220 für den Port entsprechen den Sollvorgaben für die Attribute. Liest man die Sollzahlen reihenweise (z.B., 210, 212, 214), so kann man feststellen, dass auch eine UND Verknüpfung von mindestens zwei Attributen zur Durchgangkontrolle eines Kommunikations-Inputs definiert werden kann. Erfüllt ein Datenpaket die Bedingungen mindestens einer Zeile der Soll-Kommunikationsmatrix 112, so wird das Kommunikations-Input-Signal 120 direkt in die Eingangsschnittstelle der speicherprogrammierbaren Steuerung 108 weitergeleitet.

Ist dies nicht der Fall, so wird der Kommunikations-Input-Signal 12 in das Prozessormittel 104 weitergeleitet und dort gemäß den vordefinierten Reaktionen 312, 314, 316 der Reaktionsmatrix 114 weiterbearbeitet.

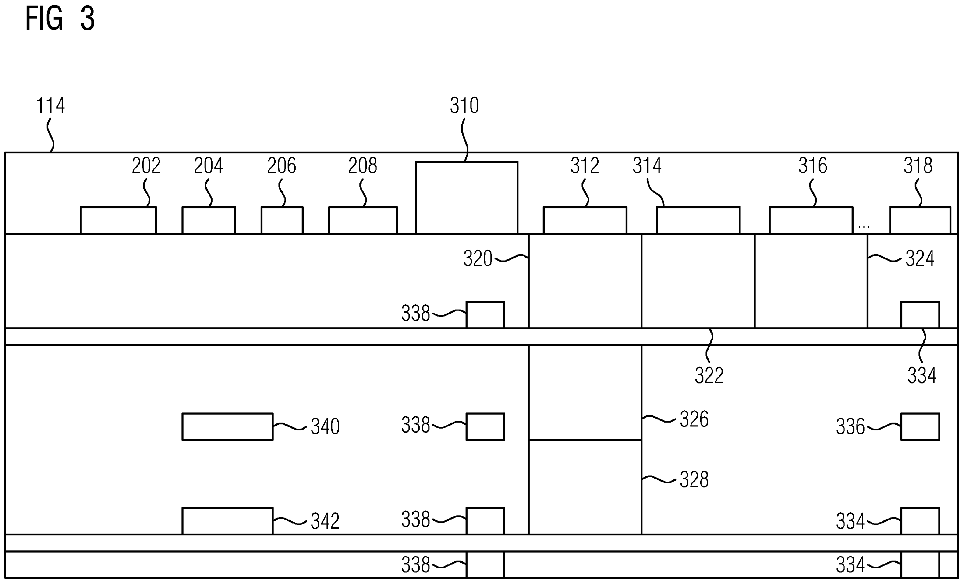

In FIG 3 wird eine Ausführungsform einer Reaktionsmatrix 114 mit Beispielen 1,2 und 3 gezeigt, wiederum mit Verwendung von mehreren Attributen zur Definition von Regeln für das Auslösen einer Reaktion beispielsweise die MAC-Adresse 202, die IP-Adresse 204, der Port 206 und/oder das Protokoll 208. Im linken Teil (die ersten vier Spalten) werden die Sollkriterien vorgegeben. So sind in Fig. 3 in Beispiel 1 und 3 keine Sollvorgaben für die Attribute eines ankommenden Kommunikations-Inputs gesetzt, während in Beispiel 2 zwei unterschiedliche Sollwerte !=144. 145.* 340 und =144. 145.* 342 für das Attribut IP-Adresse 204 einer Soll-Kommunikation zur Fallentscheidung bezüglich des Blockens 336 bzw. Nicht-Blockens 334 vorgegeben sind.

Im rechten Teil der Reaktionsmatrix 114 (rechte fünf Spalten) sind die einzelnen auszulösenden Reaktionen 320, 322, 324, 326, 328 in den Spalten "Reaktion 1" 312, "Reaktion 2" 314 und "Reaktion 3" 316 eingetragen.

In Beispiel 1 gibt die Reaktionsmatrix 114 vor, dass als Reaktion 1 314 eine Mail 320 an a@111 bei einem ersten Erscheinen der IP-Adresse verschickt werden soll. Gleichzeitig soll als Reaktion 2 314 eine SMS 322 an b@111 bei einem ersten Erscheinen der IP-Adresse gesendet werden. Als Reaktion 3 316 soll ebenso eine mail 324 an CCC bei einem ersten Erscheinen der IP-Adresse geschrieben werden. In Beispiel 2 soll sowohl bei Erfüllen des Sollwerts 340 für die IP-Adresse des Kommunikations-Inputs als auch bei Erfüllen des Sollwerts 342 für die IP-Adresse des Kommunikations-Inputs als Reaktion 1 jeweils eine mail 326 bzw. 328 an a@111 geschickt werden.

In der Spalte "Abweichungsstatistik fortschreiben" 310 wird festgelegt, bei welchen Sollwerten eine Fortschreibung der internen Statistik 110 der Soll-Ist Abweichungen im Prozessormittel 104 stattzufinden hat. In den Beispielen 1, 2 und 3 erfolgt jeweils ein Kommando 338 zum Fortschreiben einer Abweichungsstatistik 110.

In der Spalte "Blocken" 218 wird festgelegt, wann eine Blockung des Kommunikations-Inputs 101 im Gate 106 zu erfolgen hat 336 und wann nicht 334. In den Beispielen 1 und 3 schreibt die Reaktionsmatrix 114 ein Nicht-Blocken 334 des Kmmunikations-Input-Signals 126 vor. Im Beispiel 2 wird in Abhängigkeit von gesetzten Sollwerten 340 und 342 bezüglich des Attributs IP-Adresse des ankommenden Komunikations-Inputs eine Fallunterscheidung gemacht: bei Erfüllen des Sollwerts 340 schreibt die Reaktionsmatrix 114 ein Blocken 336 des Kommunikations-Input-Signals 138 vor, bei Erfüllen des Sollwerts 342 schreibt die Reaktionsmatrix 114 ein Nicht-Blocken 334 des Kommunikations-Input-Signals 126 vor.

## Patentansprüche

1. Computer-implementiertes Verfahren zur Kontrolle eines Kommunikations-Inputs (101)einer speicherprogrammierbaren Steuerung (108) einer Automatisierungskomponente einer technischen Anlage, wobei das Kontrollverfahren unmittelbar vor einer Eingangsschnittstelle der speicherprogrammierbaren Steuerung (108) stattfindet und folgende Verfahrensschritte umfasst:
- einen Soll-/Ist-Abgleich zwischen einem Kommunikations-Input (101) und vordefinierten Regeln einer Soll-Kommunikation (112),
- im Falle, dass der Kommunikations-Input (101) mindestens einer vordefinierten Regel der Soll-Kommunikation (112) entspricht (158), der Kommunikations-Input (120) direkt an die Eingangsschnittstelle der speicherprogrammierbaren Steuerung (108) weitergeleitet wird,
- im Falle, dass der Kommunikations-Input (101) nicht mindestens einer vordefinierten Regel entspricht (160), der Kommunikations-Input (128) an ein Prozessormittel (104) weitergeleitet wird, in welchem zunächst eine interne Statistik (110) aller Soll/-Ist-Abweichungen fortgeschrieben wird und dann mittels einer vordefinierten Reaktionsmatrix (114) entschieden wird, ob der jeweilige Kommunikations-Input (122, 128) zum Absetzen (116) einer vordefinierten aktiven Warnung (164) führen soll,
- im Falle, dass der Kommunikations-Input (101) nicht mindestens einer vordefinierten Regel entspricht (160), der Kommunikations-Input (124, 130) von dem Prozessormittel (104) an ein der Eingangsschnittstelle der speicherprogrammierbaren Steuerung (108) vorgeschaltetes Gate (106) weitergeleitet wird, in welchem in Abhängigkeit von der Reaktionsmatrix (114) bestimmt wird, ob der Kommunikations-Input geblockt(138) wird oder nicht (126).

2. Verfahren nach Anspruch 1, wobei die Regeln der Sollkommunikation erstellt werden durch:
- einen Lernmodus (140), wobei nach einem Einschalten des Lernmodus die speicherprogrammierbare Steuerung ein Kommunikations-Input-Profil abspeichert,
- eine manuelle Konfiguration (142), oder
- indem ein zentraler Server (144) ein Kommunikations-Input-Profil auf die speicherprogrammierbare Steuerung verteilt.

3. Verfahren nach Anspruch 1 oder 2, wobei die Reaktionsmatrix (114) Steuerungsmerkmale (134, 136) zur Steuerung von Prozessen im Prozessormittel (104) und/oder in dem Gate (106) aufweist, wobei anhand der Steuerungsmerkmale entschieden wird:
- ob und/oder auf welche Weise eine Fortschreibung der Statistik (110) aller Soll/-Ist-Abweichungen erfolgen soll,
- ob eine Warnung (164), welche eine Informationsnachricht umfasst, abgesetzt werden soll,
- und in dem Falle, dass eine Warnung (164) abgesetzt werden soll, in welcher Form (150, 152, 154, 156) die Informationsnachricht ergehen soll,
- welche Informationsnachricht übertragen werden soll,
- an welche Adresse die Informationsnachricht geschickt werden soll, und/oder
- ob der Kommunikations-Input (124,130) in dem Gate (106) geblockt (138) werden soll oder nicht (126).

4. Verfahren nach Anspruch 1, 2 oder 3, wobei die Reaktions-matrix (114) als eine stand-alone Konfiguration (142) direkt bei einer Projektierung der speicherprogrammierbaren Steuerung (108) eingegeben wird und/oder als ein Profil von einem zentralen projektierten Konfigurationsserver (146) übertragen wird.

5. Verfahren nach einem der vorhergehenden Ansprüche, wobei die Regeln der Soll-Kommunikation (112) mindestens ein Attribut umfassen, wobei ein Attribut mindestens eine MAC-Adresse (202), mindestens eine IP-Adresse (204), mindestens einen Port (206), mindestens einen Profinet-Gerätenamen, mindestens eine Anzahl von TCP-Verbindungen und/oder mindestens eine Anzahl von Datenpaketen pro Zeiteinheit umfasst.

6. Verfahren nach Anspruch 1 oder 3, wobei die Warnung (164) in Form einer Mail (150), einer SMS (152), über SNMP (154) und/oder mittels eines Webservices (156) kommuniziert wird.

7. Verfahren nach Anspruch 1 oder 3, wobei die Statistik (110) aller Soll/-Ist-Abweichungen zum Auslesen durch zentrale Server (118) bereit steht.

8. Computerprogrammprodukt mit von einem Prozessor ausführbaren Instruktionen zur Durchführung der Verfahrensschritte gemäß einem der vorigen Ansprüche.

9. Kontrollvorrichtung zur Kontrolle eines Kommunikations-Inputs (101) einer speicherprogrammierbaren Steuerung (108) einer Automatisierungskomponente einer technischen Anlage, wobei Komponenten zur Durchführung des Kontrollverfahrens unmittelbar vor einer Eingangsschnittstelle der speicherprogrammierbaren Steuerung (108) geschaltet sind, umfassend:
- mindestens ein Prozessormittel (104),
- mindestens ein Gate (106),
- Mittel zum Soll-/Ist-Abgleich (102) zwischen einem Kommunikations-Input (101) und vordefinierten Regeln einer Soll-Kommunikation (112),
- Mittel zur Weiterleitung des Kommunikations-Inputs (120) direkt an die Eingangsschnittstelle der speicherprogrammierbaren Steuerung (108), wenn der Kommunikations-Input (101) mindestens einer vordefinierten Regel der Soll-Kommunikation (112) entspricht,
- Mittel zur Weiterleitung des Kommunikations-Inputs (122, 128) an das Prozessormittel (104), in welchem sich Mittel zur Fortschreibung einer internen Statistik (110) aller Soll/-Ist-Abweichungen und Mittel zur Anwendung einer vordefinierten Reaktionsmatrix (114) befinden, wobei das Prozessormittel (104) dazu ausgebildet ist, mittels einer Anwendung der Reaktionsmatrix (114) zu entscheiden, ob der jeweilige Kommunikations-Input (122,128) zum Absetzen (116) einer vordefinierten aktiven Warnung (164) führen soll oder nicht,
- Mittel zur Weiterleitung des Kommunikations-Inputs (124,130) von dem Prozessormittel (104) an das der Eingangsschnittstelle der speicherprogrammierbaren Steuerung (108) vorgeschaltete Gate (106), wenn der Kommunikations-Input (101) nicht mindestens einer vordefinierten Regel entspricht (160), wobei das Gate (106) dazu ausgebildet ist, in Abhängigkeit von der Reaktionsmatrix (114) zu bestimmen, ob der Kommunikations-Input (101) geblockt wird oder nicht.

10. Kontrollvorrichtung nach Anspruch 9, weiter umfassend:
- Mittel zum Empfang eines Kommunikations-Inputs (100),
- Mittel zur Durchführung des Lernmodus (140) zur Erstellung der Regeln für die Soll-Kommunikation (112),
- Reaktionsmatrix (114) -Mittel zur Entscheidung, welche Reaktion vorgenommen werden soll, wobei die Reaktionen ein Absetzen (116) einer Warnung (164) und/oder ein Versenden einer Informationsnachricht vom Prozessormittel (104) und/oder eine Weiterleitung des Kommunikations-Inputs (101)in das Gate (106) und ein Blocken (138) oder Nicht-Blocken (126) des Kommunikations-Inputs (101)im Gate (106) umfassen,
- Mittel zum Absetzen (116) einer Warnung (164),
- Mittel zur Erstellung und zur Versendung einer Informationsnachricht für ein lokales und/oder zentrales Reporting,
- Mittel zur Weiterleitung des Kommunikations-Inputs (124,130) von dem Prozessormittel (104) in das Gate (106),
- Mittel zum Blocken des Kommunikations-Inputs (138),
- Mittel zur Weiterleitung des Kommunikations-Inputs (126) von dem Gate (106) zur Eingangsschnittstelle der speicherprogrammierbaren Steuerung (108), wenn der Kommunikations-Input in dem Gate (106) nicht geblockt wird,
- Mittel zum Empfang des auf einem zentralen Konfigurationsserver nach Anspruch 12 definierten Kommunikationsprofils mit vordefinierten Regeln der Soll-Kommunikation (112),
- Mittel zur Anwendung dieses Kommunikationsprofils für einen lokalen Soll-/Ist-Abgleich (102) zwischen dem ankommenden Kommunikations-Input und den vordefinierten Regeln der Soll-Kommunikation (112),
- Mittel zum Empfang der auf dem zentralen Konfigurationsserver (148) administrierten Reaktionsmatrix (114),
- Mittel zur lokalen Anwendung dieser Reaktionsmatrix (114) bei der Auswertung des ankommenden Kommunikations-Inputs (122, 128),
- Mittel zur lokalen Ausführung der vordefinierten Reaktionen (320-338), welche sich aus der Reaktionsmatrix (114) ableiten,
- Mittel zum Versenden einer Informationsnachricht an einen zentralen Server (162),
- Mittel zur Verfügungsstellung der lokal fortgeschriebenen internen Statistik (110) aller Soll/-Ist-Abweichungen an den zentralen Server (162).

11. Automatisierungsnetzwerk zur Steuerung und Kontrolle einer Kommunikation einer Eingangsschnittstelle einer speicherprogrammierbaren Steuerung (108) einer Automatisierungskomponente einer technischen Anlage, wobei das Automatisierungsnetzwerk umfasst:
- mindestens eine speicherprogrammierbare Steuerung (108) einer Automatisierungskomponente einer technischen Anlage,
- einen zentralen Konfigurationsserver nach Anspruch 12,
- eine Kontrollvorrichtung nach Anspruch 9 unmittelbar vor einer Eingangsschnittstelle jeder einzelnen speicherprogrammierbaren Steuerung (108),
- Mittel zur Kommunikation zwischen dem Konfigurationsserver (146) und der Kontrollvorrichtung.

12. Konfigurationsserver zur Konfiguration, Steuerung und Überwachung der Kontrollvorrichtung ausgebildet ist und Folgendes umfasst:
- Mittel zum Definieren von Regeln einer Soll-Kommunikation (112) der Kontrollvorrichtung nach Anspruch 9 zur Konfiguration eines Kommunikationprofils,
- Mittel zur Weiterleitung des Kommunikationprofils mit vordefinierten Regeln einer Soll-Kommunikation (112) an jede einzelne Kontrollvorrichtung,
- Mittel zur Administration einer Reaktionsmatrix (114) mit Definition von Reaktionen in Abhängigkeit von einem Kommunikations-Input, welches das Prozessormittel (104) und/oder das Gate (106) der Kontrollvorrichtung passiert,
- Mittel zu Abfrage, zum Auslesen und/oder zur Auswertung der im Prozessormittel (104) der Kontrollvorrichtung nach Anspruch 9 intern fortgeschriebenen Statistik (110) aller Soll/-Ist-Abweichungen,
- Mittel zum Empfang von Warnungen (164), die das Prozessormittel (104) der Kontrollvorrichtung aussendet.

## Claims

1. Computer-implemented method for checking a communication input (101) of a programmable logic controller (108) of an automation component of a plant, wherein the checking takes place immediately upstream of an input interface of the programmable logic controller (108) and comprises the following steps:
- nominal/actual comparison between a communication input (101) and predefined rules of a nominal communication (112),
- in the event that the communication input (101) satisfies (158) at least one predefined rule of the nominal communication (112), the communication input (120) is forwarded directly to the input interface of the programmable logic controller (108),
- in the event that the communication input (101) does not satisfy (160) at least one predefined rule, the communication input (128) is forwarded to a processor means (104) in which internal statistics (110) of all the nominal/actual deviations are first updated and it is then decided by means of a predefined reaction matrix (114) whether the respective communication input (122, 128) shall result in the issuing (116) of a predefined active warning (164),
- in the event that the communication input (101) does not satisfy (160) at least one predefined rule, the communication input (124, 130) is forwarded by the processor means (104) to a gate (106) upstream of the input interface of the programmable logic controller (108), in which gate it is determined depending on the reaction matrix (114) whether the communication input is blocked (138) or not blocked (126).

2. Method according to claim 1, wherein the rules of the nominal communication are created by:
- a learning mode (140), wherein the programmable logic controller stores a communication input profile when learning mode is activated,
- manual configuration (142), or
- by a central server (144) distributing a communication input profile to the programmable logic controllers.

3. Method according to claim 1 or 2, wherein the reaction matrix (114) has control features (134, 136) for controlling processes in the processor means (104) and/or in the gate (106), wherein it is decided on the basis of the control features:
- whether and/or in which manner the statistics (110) of all the nominal/actual deviations are to be updated,
- whether a warning (164) comprising an information message is to be issued,
- and in the event that a warning (164) is to be issued, what form (150, 152, 154, 156) the information message is to take,
- which information message is to be transmitted,
- to which address the information message is to be sent, and/or
- whether the communication input (124, 130) is to be blocked (138) or not to be blocked (126) in the gate (106).

4. Method according to claim 1, 2 or 3, wherein the reaction matrix (114) is entered directly as a stand-alone configuration (142) during configuring of the programmable logic controller (108) and/or transmitted as a profile from a centrally configured configuration server (146).

5. Method according to one of the preceding claims, wherein the rules of the nominal communication (112) comprise at least one attribute, wherein an attribute comprises at least one MAC address (202), at least one IP address (204), at least one port (206), at least one Profinet equipment name, at least one number of TCP connections and/or at least one number of data packets per time unit.

6. Method according to claim 1 or 3, wherein the warning (164) is communicated in the form of an email (150), an SMS (152), via SNMP (154) and/or by means of a Web service (156).

7. Method according to claim 1 or 3, wherein the statistics (110) of all the nominal/actual deviations are available for readout by central servers (118).

8. Computer program product having processor-executable instructions for carrying out the method steps according to one of the preceding claims.

9. Checking device for checking a communication input (101) of a programmable logic controller (108) of an automation component of a plant, wherein components for carrying out the checking method are connected immediately upstream of an input interface of the programmable logic controller (108), comprising:
- at least one processor means (104),
- at least one gate (106),
- means for nominal/actual comparison (102) between a communication input (101) and predefined rules of a nominal communication (112),
- means for forwarding the communication input (120) directly to the input interface of the programmable logic controller (108) if the communication input (101) satisfies at least one predefined rule of the nominal communication (112),
- means for forwarding the communication input (122, 128) to the processor means (104) which contains means for updating internal statistics (110) of all the nominal/actual deviations and means for applying a predefined reaction matrix (114), wherein the processor means (104) is designed to decide, by applying the reaction matrix (114), whether or not the respective communication input (122, 128) is to result in a predefined active warning (164) being issued (116),
- means for forwarding the communication input (124, 130) from the processor means (104) to the gate (106) upstream of the input interface of the programmable logic controller (108) if the communication input (101) does not satisfy at least one predefined rule (160), wherein the gate (106) is designed to determine on the basis of the reaction matrix (114) whether or not the communication input (101) is blocked.

10. Checking device according to claim 9, additionally comprising:
- means for receiving a communication input (100),
- means for implementing learning mode (140) to create the rules for the nominal communication (112),
- reaction matrix (114) means for deciding which reaction is to be performed, wherein the reactions include issuing (116) a warning (164) and/or sending an information message from the processor means (104) and/or forwarding the communication input (101) to the gate (106) and blocking (138) or not blocking (126) the communication input (101) in the gate (106),
- means for issuing (116) a warning (164),
- means for creating and sending an information message for local and/or central reporting,
- means for forwarding the communication input (124, 130) from the processor means (104) to the gate (106),
- means for blocking the communication input (138),
- means for forwarding the communication input (126) from the gate (106) to the input interface of the programmable logic controller (108) if the communication input is not blocked in the gate (106),
- means for receiving the communication profile containing predefined rules of the nominal communication (112), which profile is defined on a central configuration server according to claim 12,
- means for using this communication profile for local nominal/actual comparison (102) between the incoming communication input and the predefined rules of the nominal communication (112),
- means for receiving the reaction matrix (114) administered on the central configuration server (148),
- means for locally applying this reaction matrix (114) during evaluation of the incoming communication input (122, 128),
- means for locally executing the predefined reactions (320-338) deriving from the reaction matrix (114),
- means for sending an information message to a central server (162),
- means for providing the central server (162) with the locally updated internal statistics (110) of all the nominal/actual deviations.

11. Automation network for controlling and checking a communication of an input interface of a programmable logic controller (108) of an automation component of a plant, wherein the automation network comprises:
- at least one programmable logic controller (108) of an automation component of a plant,
- a central configuration server (146) according to claim 12,
- a checking device according to claim 9 immediately upstream of an input interface of each individual programmable logic controller (108),
- means for communication between the configuration server (146) and the checking device.

12. Configuration server which is designed to configure, control and monitor the checking device and comprises the following:
- means for defining rules of a nominal communication (112) of the checking device according to claim 9 for configuring a communication profile,
- means for forwarding the communication profile containing predefined rules of a nominal communication (112) to each individual checking device,
- means for administering a reaction matrix (114) with definition of reactions in response to a communication input passing through the processor means (104) and/or the gate (106) of the checking device,
- means for interrogating, reading out and/or evaluating the statistics (110) of all the nominal/actual deviations internally updated in the processor means (104) of the checking device according to claim 9,
- means for receiving warnings (164) sent out by the processor means (104) of the checking device.

## Revendications

1. Procédé mis en oeuvre par ordinateur de commande d'une entrée (101) de communication d'un automate (108) programmable d'un composant d'automatisation d'une installation technique, le procédé de commande ayant lieu directement avant une interface d'entrée de l'automate ( 108 ) programmable et comprenant les stades de procédé suivants :
- une égalisation consigne/réel entre une entrée ( 101 ) de communication et des règles définies à l'avance d'une communication ( 112 ) de consigne,
- dans le cas où l'entrée ( 101 ) de communication correspond ( 158 ) à au moins une règle définie à l'avance de la communication ( 112 ) de consigne, l'entrée ( 120 ) de communication est acheminée directement à l'interface d'entrée de l'automate ( 108 ) programmable,
- dans le cas où l'entrée ( 101 ) de communication ne correspond pas ( 160 ) à au moins une règle définie à l'avance, l'entrée ( 128 ) de communication est acheminée à un moyen ( 104 ) de processeur, dans lequel a été tenue à jour d'abord une statistique ( 110 ) interne de tous les écarts consigne/réel et il a ensuite été décidé, au moyen d'une matrice ( 114 ) de réaction définie à l'avance, si l'entrée ( 122, 128 ) de communication doit conduire à l'émission ( 116 ) d'une alerte ( 164 ) active définie à l'avance,
- dans le cas où l'entrée ( 101 ) de communication ne correspond pas ( 160 ) à au moins une règle définie à l'avance, l'entrée ( 124, 130 ) de communication est acheminée par le moyen ( 104 ) de processeur à une porte ( 106 ), qui est montée avant l'interface d'entrée de l'automate ( 108 ) programmable et dans laquelle il est déterminé, en fonction de la matrice ( 114 ) de réaction, si l'entrée de communication est bloquée ( 138 ) ou ne l'est pas ( 126 ) .

2. Procédé suivant la revendication 1, dans lequel on établit des règles de la communication de consigne par :
- un mode ( 140 ) d'apprentissage, dans lequel, après une connexion du mode d'apprentissage, l'automate programmable mémorise un profil d'entrée de communication,
- une configuration ( 142 ) manuelle ou
- par le fait qu'un serveur ( 144 ) central répartit un profil d'entrée de communication sur l'automate programmable.

3. Procédé suivant la revendication 1 ou 2, dans lequel la matrice ( 114 ) de réaction a des caractéristiques ( 134, 136 ) de commande pour commander des processus dans le moyen ( 104 ) de processeur et/ou dans la porte ( 106 ), dans lequel il est décidé, à l'aide des caractéristiques de commande :
- si et/ou de quelle façon doit être effectuée une tenue à jour de la statistique ( 110 ) de tous les écarts consigne/réel,
- si une alerte ( 164 ), qui comprend un message d'information, doit être émise,
- et, dans le cas où une alerte ( 164 ) doit être émise, sous quelle forme ( 150, 152, 154, 156 ), le message d'information doit passer,
- le message d'information qui doit être transmis,
- l'adresse à laquelle le message d'information doit être envoyé et/ou
- si l'entrée ( 124, 130 ) de commutation doit être bloquée ( 136 ) dans la porte ( 106 ) ou ne pas l'être ( 126 ).

4. Procédé suivant la revendication 1, 2 ou 3, dans lequel la matrice ( 114 ) de réaction est entrée sous la forme d'une configuration ( 142 ) stand-alone directement lors d'une étude de l'automate ( 108 ) programmable et/ou doit être transmise sous la forme d'un profil d'un serveur ( 146 ) de configuration centrale étudié.

5. Procédé suivant l'une des revendications précédentes, dans lequel les règles de la communication ( 112 ) de consigne comprennent au moins un attribut, dans lequel un attribut comprend au moins une adresse MAC ( 202 ), au moins une adresse IP ( 204 ) , au moins un accès ( 206 ) , au moins un nom d'appareil Profinet, au moins un certain nombre de liaisons TCP et/ou au moins un certain nombre de paquets de données par unité de temps.

6. Procédé suivant la revendication 1 ou 3, dans lequel l'alerte ( 164 ) est communiquée sous la forme d'un mail ( 150 ), d'un SMS ( 152 ), par SNMP ( 154 ) et/ou au moyen d'un service ( 156 ) We.

7. Procédé suivant la revendication 1 ou 3, dans lequel la statistique ( 110 ) de tous les écarts consigne/réel est disponible à la lecture par un serveur ( 118 ) central.

8. Produit de programme d'ordinateur, comprenant des instructions pouvant être réalisées par un processeur pour effectuer les stades du procédé suivant l'une des revendications précédentes.

9. Dispositif de contrôle d'une entrée ( 101 ) de communication d'un automate ( 108 ) programmable d'un composant d'automatisation d'une installation technique, des composants pour effectuer le procédé de contrôlé étant montés directement avant une interface d'entrée de l'automate ( 108 ) programmable, comprenant :
- au moins un moyen ( 104 ) de processeur,
- au moins une porte ( 106 ),
- un moyen d'égalisation ( 102 ) consigne/réel entre une entrée ( 101 ) de communication et des règles définies à l'avance d'une communication ( 112 ) de consigne,
- un moyen d'acheminement de l'entrée ( 120 ) de communication directement à l'interface d'entrée de l'automate ( 108 ) programmable, si l'entrée ( 101 ) de communication correspond au moins à une règle définie à l'avance de la communication ( 112 ) de consigne,
- des moyens d'acheminement de l'entrée ( 122, 128 ) de communication au moyen ( 104 ) de processeur, dans lequel se trouve un moyen de tenue à jour d'une statistique ( 110 ) interne de tous les écarts consigne/réel et un moyen d'application d'une matrice ( 114 ) de réaction définie à l'avance, le moyen ( 104 ) de processeur étant constitué pour, à l'aide d'une application de la matrice ( 114 ) de réaction, décider si l'entrée ( 122, 128 ) de communication doit conduire à l'émission ( 116 ) d'une alerte ( 164 ) active définie à l'avance ou non,
- un moyen d'acheminement de l'entrée ( 124, 130 ) de communication par le moyen ( 104 ) de processeur à la porte ( 106 ) montée en amont de l'interface d'entrée de l'automate ( 108 ) programmable, si l'entrée ( 101 ) de communication ne correspond pas ( 160 ) à au moins une règle définie à l'avance, la porte ( 106 ) étant constituée pour déterminer, en fonction de la matrice ( 114 ) de réaction, si l'entrée ( 101 ) de communication est bloquée ou ne l'est pas.

10. Dispositif de contrôle suivant la revendication 9, comprenant, en outre :
- un moyen de réception d'une entrée ( 110 ) de communication,
- un moyen pour effectuer le mode ( 140 ) d'apprentissage pour établir les règles de la communication ( 112 ) de consigne,
- un moyen matrice ( 114 ) de réaction pour décider la réaction qui doit être effectuée, les réactions comprenant une émission ( 116 ) d'une alerte ( 164 ) et/ou un envoi d'un message d'information par le moyen ( 104 ) de processeur et/ou un acheminement de l'entrée ( 101 ) de communication à la porte ( 106 ) et un blocage ( 138 ) ou un non-blocage ( 126 ) de l'entrée ( 101 ) de communication dans la porte ( 106 ),
- un moyen d'émission ( 116 ) d'une alerte ( 164 ),
- un moyen d'établissement et d'envoi d'un message d'information pour un compte-rendu local et/ou central,
- un moyen d'acheminement de l'entrée ( 124, 130 ) de communication par le moyen ( 104 ) de processeur à la porte ( 106 ),
- un moyen de blocage de l'entrée ( 138 ) de communication,
- un moyen d'acheminement de l'entrée ( 126 ) de communication de la porte ( 106 ) à l'interface d'entrée de l'automate ( 108 ) programmable, si l'entrée de communication n'est pas bloquée dans la porte ( 106 ),
- un moyen de réception du profil de communication défini sur un serveur de configuration central suivant la revendication 12 et ayant des règles définies à l'avance de la communication ( 112 ) de consigne,
- un moyen d'application de ce profil de communication pour une égalisation ( 102 ) consigne/réel locale entre l'entrée de communication arrivant et les règles définies à l'avance de la communication ( 112 ) de consigne,
- un moyen de réception de la matrice ( 114 ) de réaction administré sur le serveur ( 148 ) de configuration central,
- un moyen d'application locale de cette matrice ( 114 ) de réaction, lors de l'exploitation de l'entrée ( 122, 128 ) de communication arrivant,
- un moyen d'exécution locale des réactions ( 320-338 ) définies à l'avance, qui se déduisent de la matrice ( 114 ) de réaction,
- un moyen d'envoi d'un message d'information à un serveur ( 162 ) central,
- un moyen de mise à disposition du serveur ( 162 ) central de la statistique ( 110 ) interne tenue à jour localement de tous les écarts consigne/réel.

11. Réseau d'automatisation pour commander et contrôler une communication d'une interface d'entrée d'un automate ( 108 ) programmable d'un composant d'automatisation d'une installation technique, le réseau d'automatisation comprenant :
- au moins un automate ( 108 ) programmable d'un composant d'automatisation d'une installation technique,
- un serveur de configuration central suivant la revendication 12,
- un dispositif de contrôle suivant la revendication 9 directement avant une interface d'entrée de chaque automate ( 108 ) programmable individuel,
- un moyen de communication entre le serveur ( 146 ) de configuration et le dispositif de contrôle.

12. Serveur de configuration constitué pour la configuration, la commande et le contrôle du dispositif de contrôle et comprenant ce qui suit :
- un moyen de définition de règles d'une communication ( 112 ) de consigne du dispositif de contrôle suivant la revendication 9 pour la configuration d'un profil de communication,
- un moyen d'acheminement du profil de communication avec des règles définies à l'avance d'une communication ( 112 ) de consigne à chaque dispositif de contrôle individuel,
- des moyens d'administration d'une matrice ( 114 ) de réaction avec une définition de réaction en fonction d'une entrée de communication, qui passe dans le moyen ( 104 ) de processeur et/ou la porte ( 106 ) du dispositif de contrôle,
- des moyens d'interrogation, de lecture et/ou d'exploitation de la statistique ( 110 ) de tous les écarts consigne/réel tenue à jour d'une manière interne dans le moyen ( 104 ) de processeur du dispositif de contrôle suivant la revendication 9,
- un moyen de réception d'alerte ( 164 ), qui émet le moyen ( 104 ) de processeur du dispositif de contrôle.
